# EUROPÄISCHE PATENTSCHRIFT

(11) **EP 0 601 300 B1**
(45) Veröffentlichungstag und Bekanntmachung des Hinweises auf die Patenterteilung: **13.12.1995**
(21) Anmeldenummer: 93116118.6
(22) Anmeldetag: 06.10.1993
(51) Int. Cl.: B60K 25/00, B60R 16/02

(54) **Fahrzustandsabhängiges Schalten von elektrischen Verbrauchern in einem Kraftfahrzeug**
Driving condition dependent switching of electrical consumers in a motor vehicle
Commutation des consommateurs électriques dans une automobile en dépendance des conditions d'opération

(30) Priorität: 05.12.1992 DE 4241060
(43) Veröffentlichungstag der Anmeldung: 15.06.1994
(73) Patentinhaber: Volkswagen Aktiengesellschaft, 38436 Wolfsburg (DE)
(72) Erfinder: Alt, Wilfried, D-38162 Cremlingen (DE); Trautmann, Wilhelm, D-38547 Calberlah (DE); Heidemeyer, Paulus, Dipl.-Ing., D-38442 Wolfsburg (DE); Köhler, Uwe S., Dipl.-Ing., D-38518 Gifhorn (DE)

(56) Entgegenhaltungen:
- DE-A- 2 803 145
- DE-A- 2 916 816
- DE-A- 3 422 879
- DE-A- 3 936 638

## Beschreibung

Die Erfindung betrifft ein Fahrzeug gemäß dem Oberbegriff des Patentanspruchs 1.

In der DE-C-28 03 145 wird für ein Fahrzeug im einzelnen näher beschrieben, unter welchen Bedingungen ein Antriebsmotor des Fahrzeugs zum Zweck der Kraftstoffeinsparung vorübergehend abgestellt und anschließend wieder erneut gestartet wird. Um bei abgeschaltetem Antriebsmotor die Fahrzeugbatterie nicht zu hoch zu belasten, wird das Fahrlicht ab- oder zurückgeschaltet und erst dann wieder eingeschaltet, wenn der Anlasser des Fahrzeugs nach dem Wiederanlaßvorgang abgeschaltet ist. Diese Art der Verbraucherabschaltung ist also lediglich auf eine möglichst geringe Belastung der Fahrzeugbatterie für die Dauer der Motorabschaltung und des Wiederanlaßvorganges ausgelegt. Zudem bezieht sich die in dieser Schrift näher beschriebene Motorabschaltung auf Fahrzustände, in denen das Fahrzeug ganz oder nahezu still steht.

Ähnlich stellen sich die Verhältnisse bei einem Fahrzeug dar, das in der gattungsbildenden DE-A-34 22 879 offenbart ist. Auch dort ergibt sich eine zwangsläufige Abschaltung von elektrischen Verbrauchern im Zusammenhang mit der Abschaltung des Antriebsmotors. Die im Zusammenhang mit dem Wiederanlassen des Antriebsmotors erfolgende Verzögerung beim Wiedereinschalten der elektrischen Verbraucher betrifft ebenfalls lediglich den Stop/Start-Betrieb eines Fahrzeugs.

Aus der gattungsfremden DE-C-39 36 638 ist ein Verfahran bekannt, mit dem die elektrische Energieversorgung in einem Fahrzeug gesichert werden kann. Die gezielte Ab- und Rückschaltung einzelner Verbrauchergruppen erfolgt bei diesem Verfahren ausschließlich in Abhängigkeit vom Ladezustand der in dem Fahrzeug mitgeführten Batterie.

Der Erfindung liegt die Aufgabe zugrunde, gattungsgemäße Fahrzeuge mit automatischer An- und Abschaltung des Antriebsmotors einerseits und gezielter Abschaltung elektrischer Verbraucher andererseits so weiterzubilden, daß für ein großes Spektrum von Fahrzuständen situationsgerecht ein möglichst geringer Verbrauch von elektrischer Energie möglich wird.

Diese Aufgabe wird gelöst mit einem Fahrzeug gemäß den Merkmalen des Patentanspruchs 1. Die Unteransprüche enthalten zweckmäßige Weiterbildungen der Erfindung.

Erfindungsgemäß werden also in der Steuereinrichtung des Fahrzeugs mehrere verschiedene Fahrzustände definiert, denen jeweils vorgegebene Typen von elektrischen Verbrauchern zugeordnet sind. Diese Fahrzustände betreffen die Fahrgeschwindigkeit und den Stillstand des Fahrzeugs einerseits und für diese Zustände den jeweiligen Betriebszustand der Brennkraftmaschine andererseits. Auf der Basis der von Sensoren gelieferten Signale kann dann je nach vorliegendem Fahrzustand bestimmt werden, welche Typen von Verbrauchern einzeln oder gruppenweise, gleichzeitig oder nacheinander entsprechend einer vorgegebenen Reihenfolge, ab- oder rückgeschaltet werden sollen. Der Kern der Erfindung besteht also darin, daß zur Entlastung des elektrischen Bordnetzes sowohl bei unterschiedlichen Belastungszuständen der Brennkraftmaschine als auch bei deren An- oder Abschaltung für die elektrischen Verbraucher eine Ab- oder Rückschalthierarchie festgelegt wird, die einerseits ein Optimum an Energieeinsparung und andererseits eine vollständige Aufrechterhaltung der Betriebs- und Fahrsicherheit des Fahrzeugs ermöglicht. Zur weiteren Verfeinerung des erfindungsgemäßen Konzeptes sind über die Typenhierarchien hinaus auch hierachische Ab- und Rückschaltfolgen bei einzelnen elektrischen Verbrauchern des gleichen Typs denkbar.

Vorteilhafterweise können gegenüber herkömmlichen Fahrzeugkonzepten die Batterie und der Generator des Fahrzeugs hinsichtlich ihrer Kapazität kleiner ausgelegt werden. Durch diese Maßnahme wird sowohl Gewicht als auch Bauraum gespart. Darüber hinaus wird durch die gezielte selbsttätige Abschaltung von an sich unnötig eingeschalteten elektrischen Verbrauchern der Kraftstoffverbrauch gesenkt.

Besonders effektiv ist der Einsatz der Erfindung in Fahrzeugen mit einer sogenannten Schwungnutzautomatik. Bei diesem Antriebskonzept ist eine Brennkraftmaschine vom Getriebe oder eine der Brennkraftmaschine zugeordnete Schwungmasse über ein Doppelkupplungssystem sowohl von der Brennkraftmaschine selbst als auch vom Getriebe fahrzustandsabhängig abkoppelbar. Zur näheren Erläuterung einer solchen Schwungnutzautomatik wird auf die DE-A-27 48 697 verwiesen. In ein solches Fahrzeug läßt sich die Erfindung mit nur geringem apparativen Aufwand integrieren. Weitere Anwendungsfälle für die Erfindung sind Elektrohybridfahrzeuge, wie sie der Art nach beispielsweise aus der EP-0 348 622-A3 (F16H 3/12) oder der DE- 29 16 816-C2 (B60K 25/00) bekannt sind. Letztere ist besonders auch deshalb interessant, weil dort beschrieben wird, auf welche Weise bei abgeschalteter Brennkraftmaschine ein Generator von den Antriebsrädern her angetrieben werden kann.

Ein besonders vorteilhaftes Ausführungsbeispiel der Erfindung ist in der Zeichnung dargestellt. Es zeigt
- Figur 1:: in einem Blockschaltbild mehrere Typen von elektrischen Verbrauchern in einem Fahrzeug,
- Figur 2:: ein Diagramm zur Veranschaulichung fahrzustandsabhängiger Ab- oder Rückschaltungen.

Gleiche Symbole in den beiden Figuren weisen die gleiche Bezifferung auf.

Wesentlicher Bestandteil des hier nicht weiter dargestellten erfindungsgemäßen Fahrzeugs ist ein Steuergerät 1, das eingangsseitig im wesentlichen mit mehreren Sensoren und Schaltern verbunden ist und ausgangsseitig elektrische Stellglieder, verschiedene Anzeigevorrichtungen sowie eine Vielzahl von elektrischen Verbrauchern beaufschlagt. Zu den eingangsseitigen Schaltern gehören beispielsweise ein Zündschalter 2, ein Economy-Schalter 3 und ein Türkontaktschalter 4. Zu den die jeweiligen Fahrzustände erfassenden Sensoren gehören beispielsweise ein Motortemperatursensor 5, ein Gaspedalsensor 6, ein Gangsensor 7, ein den Steuerdruck erfassender Drucksensor 8, ein Antriebswellensensor 9 zur Erfassung der Fahrzeuggeschwindigkeit und ein Motordrehzahlsensor 10. Mit 11 ist eine Anzeigevorrichtung für die Schaltempfehlung bezeichnet. In einem Display 12 sind mehrere Kontrolleuchten angeordnet, die der Anzeige der Betriebsart wie Motordurchlauf oder Motorbremse des hier als Brennkraftmaschine ausgebildeten Motors 13 dienen. Dieser kann mit Hilfe eines Anlassers 14 angelassen werden und weist hier ein Einspritzgerät 15 auf. Mittels eines Stellgliedes 16 ist eine hier nicht weiter dargestellte Kupplung betätigbar.

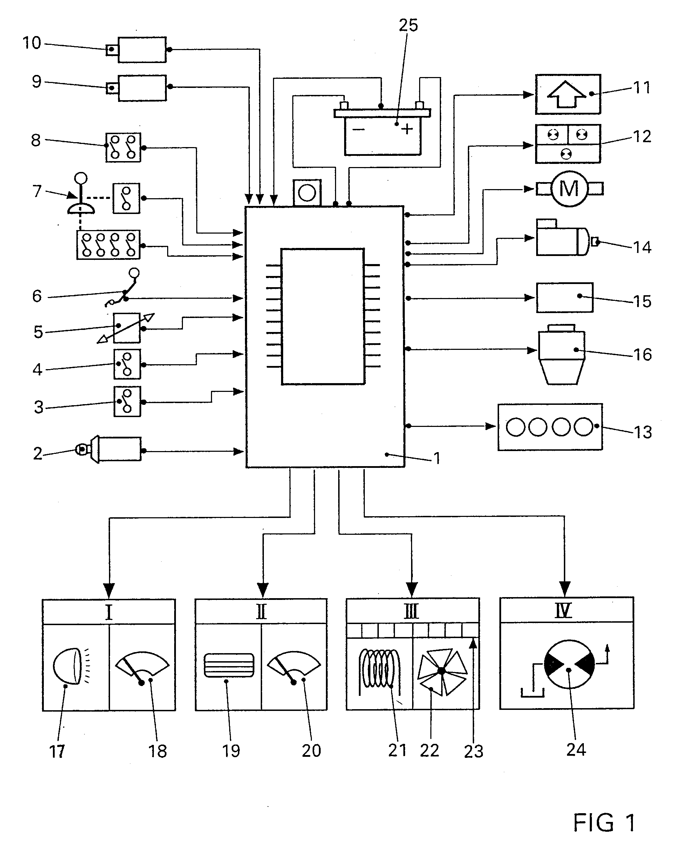

Erfindungsgemäß kategorisierte elektrische Verbraucher sind symbolisch in Tafeln angedeutet, die in der Figur 1 mit I bis IV bezeichnet worden sind. Ein erster Typ von elektrischen Verbrauchern sind beispielsweise Leuchtelemente des Fahrlichts 17 sowie eine Frontscheibenwischeinrichtung 18. Diese unterstützen die Sicht des Fahrzeugbedieners nach vorn. Zu dieser Kategorie von elektrischen Verbrauchern kann auch ein Frontscheibengebläse mit zugehöriger Heizung, eine Frontscheibenheizung und eine Frontscheiben-Spritzdüsenheizeinrichtung sein. Die zuletzt genannten Verbraucher sind hier aus Gründen der Übersichtlichkeit nicht dargestellt. Eine zweite Kategorie von elektrischen Verbrauchern unterstützt die Sicht des Fahrzeugbedieners nach hinten. Beispielhaft zu erwähnten sind hier eine Heckscheibenheizung 19, eine Heckscheibenwischanlage 20 sowie eine hier nicht dargestellte Heckscheiben-Spritzdüsenheizung. Eine dritte Kategorie von elektrischen Verbrauchern umfaßt Heiz- und Kühleinrichtungen zur Beeinflussung der Temperatur im Fahrzeuginnenraum und in Antriebsaggregaten. So ist mit 29 eine Zusatzumwälzpumpe im Heizkreis für den Fahrzeuginnenraum, mit 22 ein Motorlüfter und mit 21 eine zusätzliche Innenraumheizung, zum Beispiel eine Elektroheizung, bezeichnet. Mit dem Pfeil 23 wird auf Felder hingewiesen, die symbolisch andeuten sollen, daß über die in der Figur 1 ersichtlichen Heizungen und Gebläse hinaus noch weitere elektrische Verbraucher vom Steuergerät 1 ansteuerbar sind. Dazu können einerseits Sitzheizungen, Außenspiegelheizungen sowie die gesamte Klimaanlage und andererseits Frischluftgebläse gehören. Eine vierte Kategorie betrifft den Betrieb des Motors 13 unterstützende Einrichtungen wie die in der Zeichnung dargestellte Kraftstofförderpumpe 24 und das Einspritzgerät 15. Bei einem als Diesel-Brennkraftmaschine ausgeführten Antriebsmotor kämen noch Glüheinrichtungen zum Vorglühen, Bereitschaftsglühen und Nachglühen hinzu. Ein nach dem Otto-Prinzip arbeitender Motor 13 umfaßt beispielsweise Verbraucher wie Zusatzluftschieber, Einspritzventile, Zündtransformator und ggf. auch noch eine Heizung für eine im Abgaskanal angeordnete Lambda-Sonde (allesamt hier nicht dargestellt). Ebenfalls nicht dargestellt ist eine fünfte Kategorie von elektrischen Verbrauchern, die insbesondere sogenannte Zubehörausrichtungen wie elektrische Fensterheber, elektrische Spiegelverstellung, Antiblockiersystem, Zigarrenanzünder, Anhängevorrichtung und Radio umfaßt. Letzteres sollte zweckmäßigerweise jedoch eine Abschaltcharakteristik wie die Verbraucher des ersten Typs aufweisen, um nicht irrtümlich als defekt angesehen zu werden. Zu einer sechsten Kategorie von elektrischen Verbrauchern können sogenannte Nebenleuchtanlagen wie die Kennzeichenleuchte, Kofferraumbeleuchtung, Handschuhfachleuchte, Leseleuchte und Innenbeleuchtung mit oder ohne Ausschaltverzögerung zählen. Die zuvor erfolgte Aufzählung verschiedenartigster elektrischer Verbraucher soll verdeutlichen, daß mit dem erfindungsgemäßen Konzept so umfassend wie möglich die Belastung des elektrischen Bordnetzes und insbesondere einer Fahrzeugbatterie 25 abgesenkt werden soll.

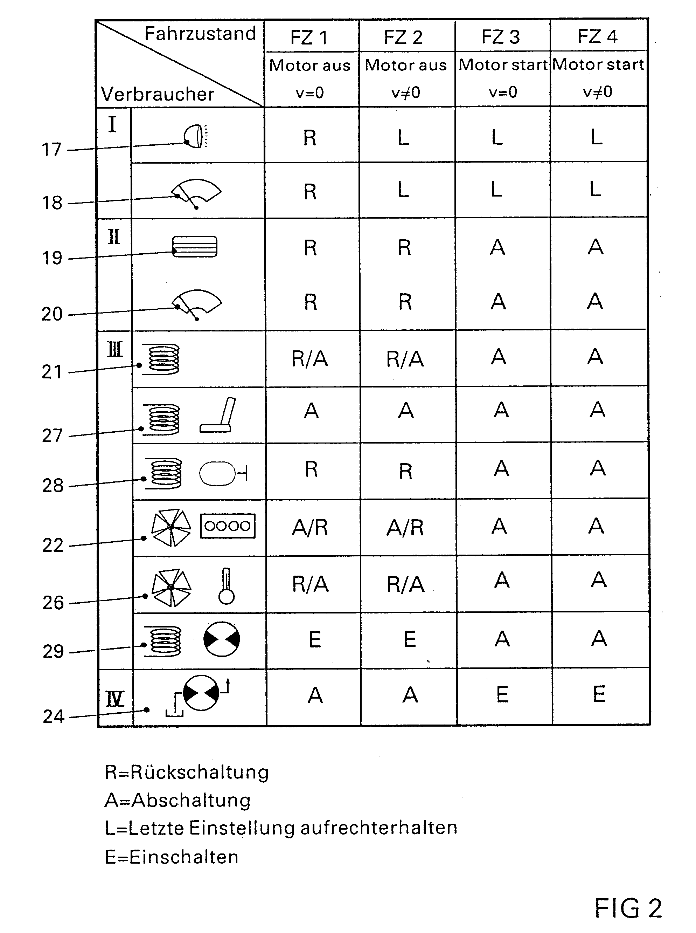

Mit Hilfe des in Figur 2 dargestellten Diagrammes wird nun erläutert, wie in einem praktischen Ausführungsbeispiel die Erfindung umgesetzt wird. Bei einem Fahrzeughalt vor einer roten Ampel signalisiert der Antriebswellensensor 9 eine Fahrgeschwindigkeit mit v = 0. Für den Fall, daß dann der Ladezustand der Fahrzeugbatterie 25 ausreichend ist und die von einer Klimaanlage 26 geforderte Leistung unterhalb einer vorgegebenen Grenzleistung liegt, erfolgt eine Motorabschaltung und beim Stillstand des Motors 13 eine Rückschaltung des Fahrlichts 17 in Richtung Standlicht oder Parklicht. Zur Vermeidung von Irritationen bei anderen Verkehrsteilnehmern durch Blinkeffekte kann die vom Fahrlicht ausgehende Abblendung stufenlos erfolgen. Je nach Rückschaltgrad kann diese Abblendung in einem Zeitraum von 2 bis 5 Sekunden stattfinden. Gleichzeitig kann die für die Frontscheibenwischeinrichtung 18 durch den Fahrzeugbediener gewählte Schaltstufe auf eine niedrigere Stufe oder auf Intervallbetrieb reduziert werden. Zur Rückschaltung der Heckscheibenheizung 19 wird ein Taktbetrieb vorgeschlagen, wobei in einer einfachen Ausführung die Taktung konstant ist und in einer verbesserten Ausführung die jeweiligen Taktzeiten in Abhängigkeit von einem Feuchtigkeitssensor und/oder Außentemperatursensor (beide hier nicht dargestellt) variabel einstellbar ist. Darüber hinaus ist es empfehlenswert, die Rückschaltung der Heckscheibenheizung auf einen vorgegebenen Zeitraum zu beschränken, um so die Sicht nach hinten während der gesamten Fahrt gewährleisten zu können. Sollte durch die Hinzuschaltung die Fahrzeugbatterie 25 zu hoch belastet werden, müßte selbsttätig eine Einschaltung des Motors 13 erfolgen. Generell ist es aus energetischen Gründen sinnvoll, die Heckscheibenheizung nicht länger als erforderlich einzuschalten.

Von den elektrischen Verbrauchern des Typs III können im Fahrzustand FZ 1 Sitzheizungen 27 vollständig abgeschaltet werden. Der Motorlüfter 22, das Frischluftgebläse und die Insassenheizung 21 können rückgeschaltet oder vollständig abgeschaltet werden. Bei eingeschalteter Klimaanlage 26 können hier nicht dargestellte Umluftklappen geschlossen und der Motorlüfter 22 sowie das Frischluftgebläse rückgeschaltet oder vollständig abgeschaltet werden.

Die Zusatzumwälzpumpe 29 soll nur betrieben werden, wenn der Motor 13 abgeschaltet und die Heizung eingeschaltet ist. Die Kraftstoffpumpe 24 kann ebenfalls abgeschaltet werden, weil sie nur für den Betrieb des Motors 13 benötigt wird.

Je nach Fahrzeugtyp und Dimensionierung der jeweiligen elektrischen Verbraucher können nun die zuvor beschriebenen Rück- oder Abschaltungen gleichzeitig oder entsprechend einer in dem Steuergerät 1 abgelegten Reihenfolge nacheinander vorgenommen werden. Dabei ist es denkbar, die einzelnen Typen hierarchisch zu ordnen, um dann typenweise eine Ab- oder Rückschaltung vornehmen zu können. Aber auch innerhalb der einzelnen Verbrauchertypen sind hierarchische Ordnungen im Hinblick auf die Abschaltfolge möglich.

Hervorzuheben beim Fahrzustand FZ2 ist die Tatsache, daß auf jeden Fall bei den elektrischen Verbrauchern des Typs I die letzte Einstellung aufrecht erhalten wird. Dies ist aus Sicherheitsgründen unbedingt notwendig. Bei den elektrischen Verbrauchern des Typs II kann demgegenüber schon unter bestimmten Bedingungen eine Rückschaltung zugelassen werden.

Für den mit FZ3 bezeichneten Wiederanlaßvorgang, beispielsweise beim Anfahren nach einem Ampelstop, wird hier vorgeschlagen, die zuvor gemäß FZ1 erfolgte Rückschaltung der Verbraucher des Typs I aufrechtzuerhalten, um das Fahrzeug nicht zu einem unbeleuchteten Verkehrshindernis werden zu lassen. Alle anderen Verbraucher können jedoch abgeschaltet werden, damit aus der Fahrzeugbatterie 25 der hohe Strombedarf des Anlassers 14 gedeckt werden kann. Lediglich die Kraftstofförderpumpe 24 ist einzuschalten, damit der Motor 13 wieder mit Betriebsstoff versorgt werden kann. Beim Fahrzustand FZ3 werden gemäß eines nicht weiter dargestellten Ausführungsbeispiels die Leuchtelemente des Fahrlichts 17 und das Radio aus einer Hilfsbatterie gespeist, die von der Fahrzeugbatterie 25 entkoppelt ist.

Für einen Wiederanlaßvorgang bei rollendem Fahrzeug (Fahrzustand FZ 4), beispielsweise während einer Bergabfahrt, kann der Motor 13 durch eine entsprechende Betätigung des der Kupplung zugeordneten Stellgliedes 15 von den Antriebsrädern her gestartet werden, so daß für den Anlaßvorgang selbst keine zusätzliche elektrische Energie benötigt wird. Dementsprechend können alle elektrischen Verbraucher zunächst ihre letzte Einstellung beibehalten, um dann nach vollständigem Durchlaufen des Motors 13 noch weiter hochgeschaltet werden zu können. Bei einem Start der Brennkraftmaschine 13 über Anlasser 4 könnte man auf die Abschaltlogik von FZ3 zurückgreifen. Verständlicherweise ist auch für den Fahrzustand FZ4 die zuvor abgestellte Kraftstofförderpumpe 24 wieder einzuschalten.

Die in der Figur 2 gezeigten Fahrzustände sind hier nur beispielhaft ausgewählt. Es können noch weitere Fahrzeugzustände definiert werden, die sich vorzugsweise an dem Belastungsgrad der Brennkraftmaschine 13 orientieren. Auch für diese kann ein spezifisches Ab- oder Rückschaltprogramm von elektrischen Verbrauchern vorgesehen werden.

Gerade auch im Hinblick auf die eingangs erwähnten Schwungnutz- und Hybridantriebskonzepte sind Fahrzustände denkbar, in denen beispielsweise die Rück- oder Abschaltung ausgesetzt oder verzögert wird, solange eine träge Rotationsmasse oder das rollende Fahrzeug noch genügend Energie zur Speisung des Bordnetzes liefern können.

## Patentansprüche

1. Fahrzeug mit
- einer Brennkraftmaschine (13) als Antriebsmotor,
- Sensoren (6 - 10) zur Erfassung der Fahrgeschwindigkeit einerseits und Betriebszuständen des Antriebsmotors andererseits,
- elektrischen Verbrauchern (17 - 22, 24 - 29), die
= aus einer Fahrzeugbatterie (25) und/oder einem von dem Antriebsmotor antreibbaren Generator mit elektrischer Energie versorgbar sind, und
= beim Abschalten oder Wiederanschalten der Brennkraftmaschine ihrerseits abschaltbar oder hinsichtlich ihres Energiebedarfs rückschaltbar sind,
- einer mit den Sensoren (6 - 10) verbundenen Steuereinrichtung (1) zur Beeinflussung der Brennkraftmaschine (13) und der elektrischen Verbraucher (17 - 22, 24 - 29),
dadurch gekennzeichnet, daß
- in der Steuereinrichtung (1) mehreren verschiedenen Fahrzuständen (FZ1 bis FZ4), die die Fahrgeschwindigkeit und den Stillstand des Fahrzeugs einerseits und für diese Zustände den jeweiligen Betriebszustand der Brennkraftmaschine andererseits betreffen, jeweils vorgegebene Typen von Verbrauchern (I - IV) zugeordnet sind, die auf der Basis der von den Sensoren (6 - 10) gelieferten Signale dem jeweils vorliegenden Fahrzustand entsprechend
= einzeln oder gruppenweise
= gleichzeitig oder nacheinander entsprechend einer in der Steuereinrichtung (1) abgelegten Rangfolge
= ab- oder rückgeschaltet
sind.

2. Fahrzeug nach Anspruch 1, dadurch gekennzeichnet, daß die Ab- oder Rückschaltung der elektrischen Verbraucher vom Belastungsgrad der Brennkraftmaschine (13) abhängig ist.

3. Fahrzeug nach Anspruch 1 oder 2, dadurch gekennzeichnet, daß ein erster Typ (I) von elektrischen Verbrauchern (Fahrlicht 17, Frontscheibenwischeinrichtung 18) der Unterstützung des Fahrers bei der Sicht nach vorn dient.

4. Fahrzeug nach Anspruch 1 oder 2, dadurch gekennzeichnet, daß ein zweiter Typ (II) von elektrischen Verbrauchern (Heckscheibenheizung 19, Heckscheibenwischeinrichtung 20) der Unterstützung des Fahrers bei der Sicht nach hinten dient.

5. Fahrzeug nach Anspruch 1 oder 2, dadurch gekennzeichnet, daß ein dritter Typ (III) von elektrischen Verbrauchern (Innenraumheizung 21, Sitzheizung 27, Außenspiegelheizung 28, Motorlüfter 22, Klimaanlage 26, Umwälzpumpe 29) elektrischen Heiz- oder Kühleinrichtungen zur Beeinflussung der Temperatur im Fahrzeuginnenraum und in Antriebsaggregaten zugeordnet ist.

6. Fahrzeug nach Anspruch 1 oder 2, dadurch gekennzeichnet, daß ein vierter Typ (IV) von elektrischen Verbrauchern (Kraftstofförderpumpe 24) dem ordnungsgemäßen Betrieb der Brennkraftmaschine (13) dient.

7. Fahrzeug nach Anspruch 1 oder 2, dadurch gekennzeichnet, daß ein fünfter Typ von elektrischen Verbrauchern Zubehöreinrichtungen dient.

8. Fahrzeug nach Anspruch 1 oder 2, dadurch gekennzeichnet, daß ein sechster Typ von elektrischen Verbrauchern Nebenleuchtanlagen umfaßt.

9. Fahrzeug nach Anspruch 2, gekennzeichnet durch eine Betriebsweise, gemäß der während eines vorübergehenden Stillstands des Fahrzeugs bei der Abschaltung der Brennkraftmaschine (13) elektrische Verbraucher des ersten Typs (I) lediglich zurückgeschaltet und gleichzeitig oder nachrangig elektrische Verbraucher der anderen Typen zumindest teilweise abgeschaltet werden.

10. Fahrzeug nach Anspruch 2, gekennzeichnet durch eine Betriebsweise, gemäß der bei einer während der Fahrt erfolgenden Abschaltung der Brennkraftmaschine (13) der Zustand der elektrischen Verbraucher des ersten Typs (I) unverändert bleibt, und gemäß der die elektrischen Verbraucher der übrigen Typen gemeinsam oder nacheinander entsprechend einer in der Steuereinrichtung (Steuergerät 1) abgelegten Rangfolge rück- oder abgeschaltet werden.

11. Fahrzeug nach Anspruch 2, gekennzeichnet durch eine Betriebsweise, gemäß der beim Wiederanlassen der Brennkraftmaschine (13) die elektrischen Verbraucher des ersten Typs (I) bis zu einem vorgegebenen Zeitpunkt, an dem die Brennkraftmaschine (13) rund durchläuft, in ihrem Zustand unverändert bleiben, und gemäß der die elektrischen Verbraucher des zweiten bis sechsten Typs gleichzeitig oder nacheinander entsprechend einer in der Steuereinrichtung (Steuergerät 1) abgelegten Rangfolge zu- oder hochgeschaltet werden.

12. Fahrzeug nach Anspruch 11, gekennzeichnet durch eine Betriebsweise, gemäß der für die Dauer des Wiederanlassens die elektrischen Verbraucher des ersten Typs (I) aus einem zusätzlichen Hilfsenergiespeicher mit Energie versorgbar sind.

13. Fahrzeug nach Anspruch 2, dadurch gekennzeichnet, daß ein Generator vorgesehen ist, der bei abgeschalteter Brennkraftmaschine (13) auch von den Antriebsrädern her antreibbar ist, so daß bei einer Abschaltung der Brennkraftmaschine (13) die Rück- oder Abschaltung der elektrischen Verbraucher entsprechend der von dem Generator jeweils gelieferten Energie verzögerbar oder aussetzbar ist.

14. Fahrzeug nach Anspruch 3 oder einem der Ansprüche 7 bis 10, gekennzeichnet durch eine Betriebsweise, gemäß der das Fahrlicht (17) innerhalb einer vorgegebenen Zeitspanne kontinuierlich zum Zwecke einer Auf- oder Abblendung herauf- oder heruntergeschaltet wird.

15. Fahrzeug nach Anspruch 4 oder einem der Ansprüche 7 bis 10, dadurch gekennzeichnet, daß eine Heckscheibenheizung (19) auf einen Taktbetrieb umstellbar ist.

16. Fahrzeug nach Anspruch 3 und einem der Ansprüche 7 bis 10, gekennzeichnet durch eine Betriebsweise, gemäß der eine Frontscheibenwischeinrichtung (18) auf Intervallbetrieb eingestellt wird.

17. Fahrzeug nach den Ansprüchen 7 bis 10, dadurch gekennzeichnet, daß mit der Steuereinrichtung (Steuergerät 1) verbundene Temperatursensoren vorgesehen sind, so daß beim Erreichen vorgegebener Grenzwerte, die in der Steuereinrichtung (Steuergerät 1) vorgegeben oder durch den Fahrzeugbediener eingestellt sind, die elektrischen Verbraucher selbsttätig rück- oder abschaltbar sind.

18. Fahrzeug nach Anspruch 2, dadurch gekennzeichnet, daß eine der Brennkraftmaschine 13 zugeordnete Schwungmasse von der Brennkraftmaschine bei einer Motorabschaltung abkoppelbar ist, und daß die Rotationsenergie der trägheitsbedingt weiterlaufenden Schwungmasse durch eine Generatoreneinrichtung zur Erzeugung elektrischer Energie in der Weise nutzbar ist, daß die Ab- oder Rückschaltung der elektrischen Verbraucher entsprechend der von der Generatoreinrichtung noch gelieferten Energie verzögerbar oder aussetzbar ist.

## Claims

1. Motor vehicle having an internal combustion engine (13) as a drive motor, sensors (6-10) for detecting the travel velocity on one side and the operating conditions of the drive motor on the other side, electrical units (17 - 22, 24-29) which are supplied with electrical energy from a motor vehicle battery (25) and/or a generator driven by the drive motor and when the internal combustion engine is switched off or re-started, the said units can be switched off or switched back in with respect to their energy requirement, and furthermore a control device (1) connected to the sensors (6-10) for the purpose of influencing the internal combustion engine (13) and the electrical units (17-22, 24-29), characterised in that in the control unit (1) in each case predetermined types of electrical units (I-IV) are associated with several different operating conditions (FZ1 to FZ4) which affect on the one side the travel velocity and the stationary state of the motor vehicle and on the other side for these conditions the respective operating condition of the internal combustion engine, which electrical units on the basis of the signals supplied by the sensors (6-10) corresponding to the respective prevailing travel condition are switched off or switched back in individually or in groups simultaneously or consecutively according to a sequence stored in the control device (1).

2. Motor vehicle according to claim 1, characterised in that the switching off or switching back in of the electrical units is dependent upon the load level on the internal combustion engine (13).

3. Motor vehicle according to claim 1 or 2, characterised in that a first type (I) of electrical units (travel light 17, front windscreen wiping device 18) serve to enhance the view of the driver towards the front.

4. Motor vehicle according to claim 1 or 2, characterised in that a second type (II) of electrical units (rear windscreen heating device 19, rear windscreen wiping device 20) serve to enhance the view of the driver towards the rear.

5. Motor vehicle according to claim 1 or 2, characterised in that a third type (III) of electrical units (interior heating device 21, seat heating device 27, outside mirror heating device 28, engine fan 22, air conditioning 26, circulating pump 29) is associated with electrical heating or cooling devices for the purpose of influencing the temperature in the passenger interior compartment and in the drive units.

6. Motor vehicle according to claim 1 or 2, characterised in that a fourth type (IV) of electrical units (fuel pump 24) assists the proper operation of the internal combustion engine (13).

7. Motor vehicle according to claim 1 or 2, characterised in that a fifth type of electrical units serves the accessory units.

8. Motor vehicle according to claim 1 or 2, characterised in that a sixth type of electrical units includes additional lighting systems.

9. Motor vehicle according to claim 2, characterised by a method of operating, according to which during a temporary stationary condition of the motor vehicle when switching off the internal combustion engine (13) electrical units of the first type (I) are only switched back in and simultaneously or consecutively electrical units of other types are at least partially switched off.

10. Motor vehicle according to claim 2 characterised by a method of operation according to which in the event of the internal combustion engine (13) being switched off during the journey the condition of the electrical units of the first type (I) remains unchanged and according to which method the electrical units of the other types are switched back in or off simultaneously or consecutively according to a sequence stored in the control device (control device 1).

11. Motor vehicle according to claim 2, characterised by a method of operation according to which when restarting the internal combustion engine (13) the electrical units of the first type (I) remain unchanged in their condition until a predetermined point in time, at which the internal combustion engine (13) rotates and according to which method the electrical units of the second to the sixth types are switched in or up simultaneously or consecutively according to a sequence stored in the control device (control unit 1).

12. Motor vehicle according to claim 11, characterised by a method of operation according to which the electrical units of the first type (I) are supplied with energy from an additional auxiliary energy reservoir for the duration of the restart.

13. Motor vehicle according to claim 2, characterised by the fact that a generator is provided which can also be driven by the drive wheels when the internal combustion engine (13) is switched off, so that upon switching off the internal combustion engine (13) the switching in or off of the electrical units can be delayed or omitted according to the energy supplied in each case by the generator.

14. Motor vehicle according to claim 3 or any one of claims 7 to 10, characterised by a method of operation, according to which the travel light (17) is increased or reduced continuously within a predetermined period of time for the purpose of selecting full beam or dipped beam.

15. Motor vehicle according to claim 4 or any one of claims 7 to 10, characterised by the fact that a rear windscreen heating device (19) can be converted to a cyclic operation.

16. Motor vehicle according to claim 3 and any one of claims 7 to 10 characterised by a method of operation according to which a front windscreen wiping device (18) can be set to intermittent operation.

17. Motor vehicle according to claims 7 to 10, characterised in that temperature sensors are provided which are connected to the control device (control device 1), so that when achieving predetermined limit values, which are predetermined in the control device (control device 1) or set by the motor vehicle operator, the electrical units are automatically switched in or off.

18. Motor vehicle according to claim 2, characterised in that a centrifugal mass associated with the internal combustion engine 13 can be uncoupled from the internal combustion engine when switching off the motor and that the rotational energy of the centrifugal mass which continues to run owing to inertia can be used by a generator device for the purpose of producing electrical energy in such a manner that the switching off or switching in of the electrical units can be retarded or omitted according to the energy still being supplied by the generator device.

## Revendications

1. Véhicule comportant
- un moteur à combustion interne (13) en tant que moteur d'entraînement,
- des capteurs (6 à 10) pour détecter la vitesse du véhicule d'une part et les situations de marche du moteur d'entraînement d'autre part,
- des appareils consommateurs d'électricité (17 à 22, 24 à 29), qui
= peuvent être alimentés, à partir de la batterie (25) du véhicule et/ou d'un alternateur qui peut être entraîné par le moteur d'entraînement, en énergie électrique et
= peuvent être débranchés lors du débranchement ou du rebranchement du moteur à combustion interne ou dont la consommation d'énergie peut être réduite
- un dispositif de commande (1) relié aux capteurs (6 à 10) servant à commander le moteur à combustion interne (13) et les appareils qui consomment de l'électricité (17 à 22, 24 à 29),
véhicule caractérisé en ce que
- dans le dispositif de commande (1), à plusieurs situations de marche différentes (FZ1 à FZ4), qui concernent la vitesse de la marche et l'arrêt du véhicule d'une part et, pour ces situations, l'état correspondant de fonctionnement du moteur à combustion interne d'autre part, sont respectivement associés des types prédéfinis d'appareils consommateurs d'électricité (I-IV) qui, sur la base des signaux délivrés par les capteurs (6 à 10), correspondant à la situation de marche existante, sont:
= individuellement ou par groupes
= en même temps ou les uns après les autres de façon correspondant à un ordre mis dans le dispositif de commande (1)
= débranchés ou réduits quant à leur consommation.

2. Véhicule selon la revendication 1, caractérisé en ce que le débranchement ou la réduction de la consommation des appareils consommateurs d'électricité dépend du degré de charge du moteur à combustion interne (13).

3. Véhicule selon la revendication 1 ou 2, caractérisé en ce qu'un premier type (I) d'appareils consommateurs d'électricité (éclairage de marche 17, système d'essuie-glace pour le pare-brise 18) sert à aider le conducteur à voir vers l'avant.

4. Véhicule selon la revendication 1 ou 2, caractérisé en ce qu'un deuxième type (II) d'appareils consommateurs d'électricité (chauffage de la glace arrière 19, système d'essuie-glace pour la glace arrière 20) sert à aider le conducteur à voir vers l'arrière.

5. Véhicule selon la revendication 1 ou 2, caractérisé en ce qu'un troisième type (III) d'appareils consommant de l'électricité (chauffage de l'habitacle 21, chauffage des sièges 27, chauffage des rétroviseurs extérieurs 28, ventilateur du moteur 22, installation de climatisation 26, pompe de circulation 29) est associé à des systèmes de chauffage ou de refroidissement électriques qui servent à régler la température à l'intérieur du véhcule et dans les ensembles d'entraînement.

6. Véhicule selon la revendication 1 ou 2, caractérisé en ce qu'un quatrième type (IV) d'appareils consommateurs d'électricité (pompe de refoulement de carburant 24) sert au fonctionnement correct du moteur à combustion interne (13).

7. Véhicule selon la revendication 1 ou 2, caractérisé en ce qu'un cinquième type d'appareils consommateurs d'électricité sert à des dispositifs accessoires.

8. Véhicule selon la revendication 1 ou 2, caractérisé en ce qu'un sixième type d'appareils consommateurs d'électricité comprend des dispositifs d'éclairage auxiliaires.

9. Véhicule selon la revendication 2, caractérisé par un mode de fonctionnement, selon lequel pendant un arrêt provisore du véhicule lors du débranchement du moteur à combustion interne (13) uniquement les appareils consommateurs d'électricité du premier type (I) ont leur consommation réduite et en même temps ou les uns après les autres des appareils consommateurs d'électricité des autres types sont au moins en partie débranchés.

10. Véhicule selon la revendication 2, caractérisé par un mode de fonctionnement selon lequel, lors d'un débranchement du moteur à combustion interne (13) ayant lieu pendant la marche, la situation des appareils consommateurs d'électricité du premier type (i) demeure inchangée et selon lequel les appareils consommateurs d'électricité des autres types sont réduits quant à leur consommation ou débranchés ensemble ou les uns après les autres selon un ordre mis dans le dispositif de commande (appareil de commande 1)

11. Véhicule selon la revendication 2, caractérisé par un mode de fonctionnement selon lequel, lors du redémarrage du moteur à combustion interne (13), les appareils consommateurs d'électricité du premier type (I) ont leur état qui demeure inchangé jusqu'à un instant prédéfini, auquel le moteur à combustion interne (13) tourne rond, et selon lequel les appareils consommateurs d'électricité du deuxième au sixième type sont branchés en plus ou à fond en même temps ou les uns après les autres selon un ordre mis dans le dispositif de commande (appareil de commande 1).

12. Véhicule selon la revendication 11, caractérisé par un mode de fonctionnement selon lequel pendant la durée du redémarrage les appareils consommateurs d'électricité du premier type (I) peuvent être alimentés en énergie à partir d'un accumulateur d'énergie auxiliaire.

13. Véhicule selon la revendication 2, caractérisé en ce que l'on prévoit un alternateur qui , quand le moteur à combustion interne (13) est débranché, peut être aussi entraîné à partir des roues motrices, de telle sorte que, lors d'un débranchement du moteur à combustion interne (13), on puisse retarder ou exclure la réduction de consommation ou le débranchement des appareils consommateurs d'électricité en fonction de l'énergie délivrée par l'alternateur.

14. Véhicule selon la revendication 3 ou l'une des revendications 7 à 10, caractérisé par un mode de fonctionnement selon lequel l'éclairage de marche (17) est augmenté ou diminué pendant un laps de temps prédéfini de façon continue dans le but d'effectuer une augmentation ou une réduction des feux de route.

15. Véhicule selon la revendication 4 ou l'une des revendications 7 à 10, caractérisé en ce qu'un chauffage de la glace arrière (19) peut être mis sur un fonctionnement cadencé.

16. Véhicule selon la revendication 3 et l'une des revendications 7 à 10, caractérisé par un mode de fonctionnement selon lequel un système d'essuie-glace de pare-brise (18) est mis sur un fonctionnement intermittent.

17. Véhicule selon les revendications 7 à 10, caractérisé en ce que des capteurs de température, reliés au dispositif de commande (appareil de commande 1), sont prévus de telle sorte que lorsque des valeurs limites prédéfinies sont atteintes, valeurs qui sont prédéfinies dans le dispositif de commande (appareil de commande 1) ou réglées par l'usager du véhicule, les appareils qui consomment de l'électricité soient automatiquement débranchés ou réduits quant à leur consommation.

18. Véhicule selon la revendication 2, caractérisé en ce que l'une des masses d'inertie associées au moteur à combustion interne (13) peut être découplée du moteur à combustion interne lors d'un débranchement du moteur et en ce que l'énergie de rotation de la masse d'inertie qui continue à tourner du fait de son inertie peut être utilisée par un système d'alternateur servant à produire de l'énergie électrique d'une manière telle que la réduction de consommation ou le débranchement des appareils consommateurs d'électricité puisse être retardé ou exclu en fonction de l'énergie encore délivrée par le système d'alternateur.
